# EUROPÄISCHE PATENTSCHRIFT

(11) **EP 2 149 828 B1**
(45) Veröffentlichungstag und Bekanntmachung des Hinweises auf die Patenterteilung: **08.01.2014**
(21) Anmeldenummer: 09008353.6
(22) Anmeldetag: 26.06.2009
(51) Int. Cl.: G05B 19/042, G06F 1/32

(54) **Vorrichtung und Verfahren zum Reduzieren des Energieverbrauchs einer Maschine oder Anlage**
Method and device for reducing the energy consumption of a machine or assembly
Dispositif et procédé de réduction de la consommation d'énergie d'une machine ou d'une installation

(30) Priorität: 31.07.2008 DE 102008035756
(43) Veröffentlichungstag der Anmeldung: 03.02.2010
(73) Patentinhaber: Robert Bosch GmbH, 70469 Stuttgart (DE)
(72) Erfinder: Buerger, Thomas, 60385 Frankfurt (DE); Landgraf, Guenther, 97753 Karlstadt (DE); Bruehl, Jens, 97816 Lohr (DE)
(74) Vertreter: Thürer, Andreas

(56) Entgegenhaltungen:
- EP-A1- 1 854 386
- DE-A1-102006 062 479
- DE-A1-102006 062 603
- JP-A- 10 173 840
- JP-A- 2005 309 016
- US-A- 5 925 132
- US-A1- 2004 122 545
- US-A1- 2007 050 093
- US-B1- 6 404 157

## Beschreibung

Die vorliegende Erfindung befasst sich mit einer Vorrichtung und einem Verfahren zum Reduzieren des Energieverbrauchs einer Maschine, die insbesondere bei Maschinen im Bereich der Automatisierungstechnik eingesetzt werden können.

Gerade bei Maschinen der Automatisierungstechnik, beispielsweise in der Automobilindustrie, besteht ein Bedürfnis zur Energieeinsparung. Eingeschaltete Maschinen weisen auch dann einen Energieverbrauch auf, wenn sie gerade keine Aktion ausführen. Um den Energieverbrauch zu senken, besteht für einen Bediener der Maschine die einzige Möglichkeit darin, die gesamte Maschine bzw. nur den Leistungsteil der Maschine auszuschalten.

Beim Ausschalten der gesamten Maschine können wichtige Informationen verloren gehen. Insbesondere betrifft dies Informationen, die in einem flüchtigen Speicher gespeichert sind. Um einen Informationsverlust zu vermeiden, kann die Maschine daher nicht in jeder Situation ausgeschaltet werden. Zudem dauert ein Wiederanlauf der Maschine sehr lange und häufig stehen nicht mehr aller erforderlichen Daten für die betreffende Situation an der Maschine zur Verfügung. Ferner kann es in spezifischen Situationen beim Abschalten zu unzulässigen Reaktionen der Aktoren der Maschine kommen.

EP 1 854386 A1 beschreibt eine Getränkebereitungsmaschine. Eine Steuereinheit ist ausgebildet, um - falls ein Betätigungselement zum Zwecke des Abschaltens des Stroms betätigt wird - die jeweiligen Funktionseinheiten der Getränkebereitungsmaschine kontrolliert in einen Zustand zu überführen, in dem der Strom abgeschaltet werden kann, ohne weitere Probleme zu verursachen.

US 5 925 132 A beschreibt ein Feldgerät. Um den Leistungsverbrauch im Feldgerät zu senken, können die Bauteile und Bauelemente, die viel Leistung verbrauchen und zumindest zeitweise nicht genutzt werden, abgeschaltet oder in einen Schlaf-Modus versetzt werden.

US 2004/122545 A1 beschreibt ein Substratverarbeitungsgerät mit einem normalen Modus, einen Energiesparmodus und einem Standby Modus. Der Energiesparmodus kann ausgewählt werden, wenn eine geringe Arbeitsleistung des Substratverarbeitungsgeräts ausreichend ist.

Es ist die Aufgabe der vorliegenden Erfindung eine Vorrichtung und ein Verfahren zum Reduzieren des Energieverbrauchs einer Maschine sowie eine Maschine mit einem geringeren Energieverbrauch zu schaffen.

Diese Aufgabe wird durch eine Vorrichtung und ein Verfahren gemäß den Hauptansprüchen gelöst.

Der vorliegenden Erfindung liegt die Erkenntnis zugrunde, dass sich der Energieverbrauch einer Maschine reduzieren lässt, indem die Maschine einen einstufigen-, zweistufigen oder mehrstufigen Abschaltmechanismus benutzt. Maschinen können sich je nach Betriebssituation unter energetischen Betrachtungen in folgenden Zuständen befinden:
"Aus"
"Sleep-Mode": In diesem Zustand wird beispielsweise nur eine übergeordnete Steuerung mit Steuerspannung (z.B. 24V) versorgt.
"Stand by": In diesem Zustand kann die Steuerspannung (z.B. 24V) anliegen; beispielsweise nur für die Antriebe und die zugehörige Steuerung sowie für Nebenprozesse, wie etwa einer Lampe innerhalb der Maschine.
"Fertigungsbereitschaft": In diesem Zustand kann an allen fertigungsrelevanten Komponenten, wie beispielsweise die Antriebe oder Nebenaggregate, wie z.B. HydraulikPumpen, "Leistung" (z.B. 380 V) anliegen.
"Fertigung": In diesem Zustand können an Werkzeugmaschinen die Antriebe entsprechend den Erfordernissen des Bearbeitungsprozesses Energie "ziehen", während die Nebenkomponenten in der Regel kontinuierlich laufen, ohne Bezug zum zu fertigenden Teilespektrum.

Wird eine Maschine oder Anlage von einem Bediener beispielsweise während der Fertigung gestoppt, so wechselt sie, sofern sie eine bestimmte Zeit nicht benutzt wird, von Fertigungsbereitschaft nach Stand by. Wird die Maschine/Anlage weiterhin eine bestimmte Zeit nicht genutzt so, schaltet sie sich automatisch in den Sleep-Modus und entsprechend nach einer weiteren bestimmten Zeit u.U. vollständig ab.

Ein Vorteil der Erfindung liegt darin, dass sich der Energieverbrauch einer Maschine um ca. 30% reduzieren lässt, wenn konsequent bei jedem Maschinenstillstand der Stand by-Mode aktiviert und anschließend der Sleep-Mode oder gar vollständig abgeschaltet wird.

Ein weiterer Vorteil besteht darin, dass beim Aktiveren des Energiesparmodus ein Informationsverlust vermieden werden kann. Zudem kann ein Wiederanlauf der Maschine sehr schnell durchgeführt werden und es können alle erforderlichen Daten für die betreffende Situation an der Maschine wieder zur Verfügung gestellt werden. Ferner können unzulässigen Reaktionen der Aktoren der Maschine verhindert werden.

Die vorliegende Erfindung schafft eine Vorrichtung zum Reduzieren des Energieverbrauchs einer Maschine, mit einer Deaktivierungseinrichtung, die ausgebildet ist, um ansprechend auf ein vorbestimmtes Deaktivierungsereignis ein Deaktivierungssignal bereitzustellen; und einer Überwachungseinrichtung, die ausgebildet ist, um die Maschine ansprechend auf das Deaktivierungssignal gemäß einer vorbestimmten Deaktivierungsvorschrift in einen Energiesparmodus zu überführen.

Die vorliegende Erfindung schafft ferner eine Maschine mit einem Betriebsmodus und einem Energiesparmodus, die eine erfindungsgemäße Vorrichtung zum Reduzieren des Energieverbrauchs aufweist.

Die vorliegende Erfindung schafft ferner ein Verfahren zum Reduzieren des Energieverbrauchs einer Maschine, mit einem Schritt des Bereitstellens eines Deaktivierungssignals, ansprechend auf ein vorbestimmtes Deaktivierungsereignis; und einem Schritt des Überführens der Maschine in einen Energiesparmodus gemäß einer vorbestimmten Deaktivierungsvorschrift, ansprechend auf das Deaktivierungssignal. Ein erfindungsgemäßes Computerprogrammprodukt mit Programmcodemitteln, die auf einem computerlesbaren Datenträger gespeichert sind, ist zur Durchführung des erfindungsgemäßen Verfahrens vorgesehen, wenn dieses Computerprogramm auf einem Computer oder einer entsprechenden Recheneinheit, insbesondere einer erfindungsgemäßen Vorrichtung, durchgeführt wird.

Bevorzugte Ausführungsbeispiele der vorliegenden Erfindung werden nachfolgend Bezug nehmend auf die beiliegenden Zeichnungen näher erläutert. Es zeigen:
Fig. 1 eine schematische Darstellung einer erfindungsgemäßen Vorrichtung;
Fig. 2 eine Darstellung eines Grundprinzips eines erfindungsgemäßen Sleep-Modus;
Fig. 3 eine Darstellung einer erfindungsgemäßen Maschine; und
Fig. 4 eine Darstellung einer möglichen Ausprägung der Logik der Deaktivierungseinrichtung.

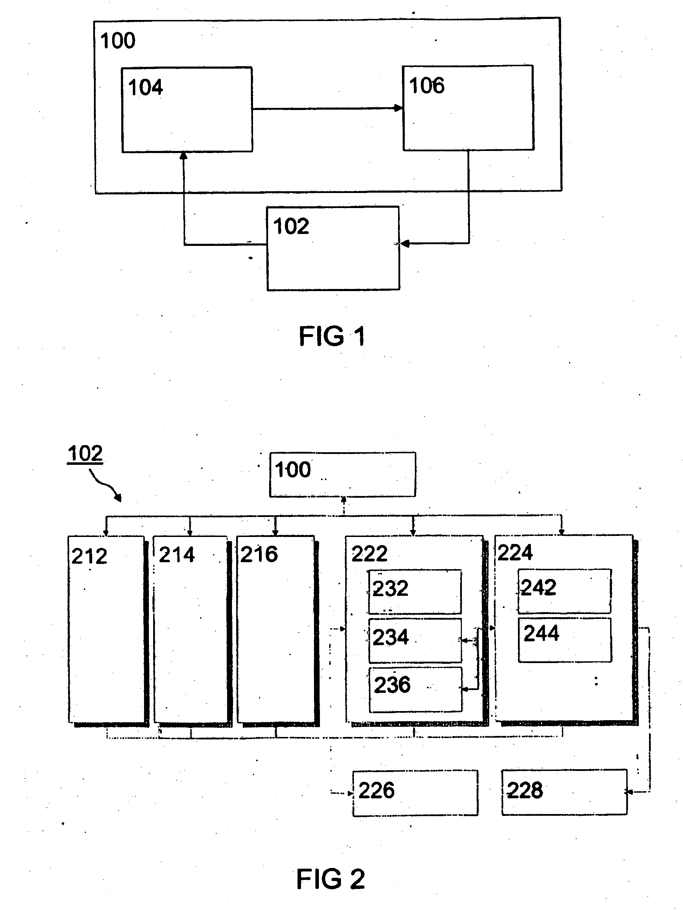

Fig. 1 zeigt eine Vorrichtung 100 zum Reduzieren des Energieverbrauchs einer Maschine 102, gemäß einem Ausführungsbeispiel der vorliegenden Erfindung. Die Vorrichtung 100 weist eine Deaktivierungseinrichtung 104 und eine Überwachungseinrichtung 106 auf.

Die Deaktivierungseinrichtung 104 ist ausgebildet, um ansprechend auf ein vorbestimmtes Deaktivierungsereignis ein Deaktivierungssignal bereitzustellen. Das Deaktivierungsereignis kann darin bestehen, dass sich die Maschine für eine vorbestimmte Zeitdauer in Fertigungsbereitschaft befindet, also beispielsweise keine Fertigungsaufgabe ausführt. Dazu kann die Deaktivierungseinrichtung 104 mit der Maschine 102 gekoppelt sein und beispielsweise eine Zeitüberwachung aufweisen. Die Zeitüberwachung kann ausgebildet sein, um das Deaktivierungssignal bereitzustellen, wenn sich die Maschine für die vorbestimmte Zeitdauer in einem Ruhezustand befindet. Die Überwachungseinrichtung 106 ist ausgebildet, um die Maschine 102 ansprechend auf das Deaktivierungssignal gemäß einer vorbestimmten Deaktivierungsvorschrift in einen Energiesparmodus zu überführen. Die Deaktivierungsvorschrift kann einen Algorithmus oder eine Abfolge von Anweisungen aufweisen, um die Maschine 102 von einem Betriebsmodus in den Energiesparmodus zu überführen. Durch Anwenden der Deaktivierungsvorschrift kann sichergestellt werden, dass es beim Überführen der Maschine 102 in den Energiesparmodus zu keinen unerwünschten Zuständen der Maschine 102 oder zu einem Datenverlust kommt.

Gemäß der Deaktivierungsvorschrift kann die Überwachungseinrichtung 106 ausgebildet sein, um Betriebsinformationen der Maschine beim Überführen in den Energiesparmodus zu sichern. Insbesondere kann die Überwachungseinrichtung 106 ausgebildet sein, um Daten eines flüchtigen Speichers der Maschine 102 beim Überführen in den Energiesparmodus auf einen nicht-flüchtigen Speicher zu übertragen. Um den kompletten Speicher zu sichern, kann die Überwachungseinrichtung 106 ausgebildet sein, um Daten von verschiedenen Stellen zu sichern. Bei den zu sichernden Betriebsinformationen kann es sich beispielsweise um eine Firmware, um Parameter, Steuerprogramme oder um Konfigurationsdaten handeln.

Sofern die Maschine mindestens einen Aktor aufweist, kann die Überwachungseinrichtung 106 ausgebildet sein, um eine Funktion des Aktors beim Überführen der Maschine 102 in den Energiesparmodus zu überwachen. Dadurch kann eine unzulässige Funktion des Aktors verhindert werden.

An Werkzeugmaschinen kann es beispielsweise vorkommen, dass ein Maschinenbediener die Maschine mitten in einem Werkzeugwechsel anhält und anschließend abschaltet. Je nach Realisierung kann es in solchen kritischen Situationen vorkommen dass durch den Abschaltvorgang beispielsweise ein Werkzeug, das sich in einem Übergabe-Greifer, also beispielsweise zwischen Werkzeugspeicher und Werkzeugspindel, befindet, aus dem Greifer fällt. In einer solchen Situation liegen unter Umständen zwei Probleme vor. Als sicherer E/A-Abschaltzustand des Greifers wurde der geöffnete Zustand angenommen, was einer solchen Situation nicht gerecht wird (> fehlerhaft Auslegung des ausgeschalteten Greiferzustands). Des Weiteren wird die Übergabe der Werkzeuge für die interne Ablauf-Schrittkette häufig mittels Variablen realisiert, die entweder lokal definiert sind oder in einem flüchtigen Speicher abgelegt sind (> fehlerhafte Projektierung des Ablaufs). Selbst in Fällen in denen die interne Ablauf-Schrittkette mittels globaler permanenter Variablen, also Variablen, die ihren Zustand über dem Ausschalten hinweg beibehalten, realisiert ist, werden häufig die Sonderfälle, wie die Unterbrechung innerhalb eines Werkzeugwechsel beim Wiedereinschalten der Maschine nicht oder nur unzureichend berücksichtigt. Ein entsprechender Einstieg in die interne Ablaufschrittkette ist häufig nicht vorhanden (> unzureichende programmtechnische Absicherung der Sonderfälle).

Zur Absicherung dieser Sondersituationen, die entweder von der Auslegung oder von der Software-Seite her nur unzureichend berücksichtigt wurden, kann beispielsweise die Überwachungseinrichtung 106 dafür Sorge tragen, das ein Ausschalten der Maschine /Anlage während eines Werkzeugwechselvorgangs unterbunden wird, auch wenn die Maschine sich bereits eine definierte Zeit im Zustand Stand by oder Sleep-Mode befindet. Erst am Ende eines solchen Werkzeugwechselvorgangs könnte dann ein Ausschalten erfolgen.

Die Überwachungseinrichtung kann so ausgebildet sein, dass sie alle relevanten Aktoren hinsichtlich eines sicheren Abschaltens überwacht. Denkbar ist es auch das die Aufgaben der Überwachungseinrichtung 106 in die Deaktivierungseinrichtung 104 wandern bzw. beide Einrichtungen innerhalb eines Moduls realisiert werden.

Sofern die Maschine eine Mehrzahl von Teilsystemen aufweist, kann die Überwachungseinrichtung 106 ausgebildet ist, um einzelne oder alle Teilsysteme ansprechend auf das Deaktivierungssignal in den Energiesparmodus zu überführen.

Ferner kann die Überwachungseinrichtung 106 ausgebildet sein, um die Maschine ansprechend auf ein erstes Deaktivierungssignal in einen ersten Energiesparmodus und ansprechend auf ein zweites Deaktivierungssignal in einen zweiten Energiesparmodus (u.U. Ausschalten der Maschine) zu überführen. In dem zweiten Energiesparmodus kann ein Energieverbrauch der Maschine geringer als in dem ersten Energiesparmodus sein. Weist die Maschine 102 eine Steuerelektronik und mindestens einen Aktor auf, so kann die Überwachungseinrichtung 106 beispielsweise ausgebildet sein, um im ersten Energiesparmodus eine Energieversorgung der Steuerelektronik und des Aktors bereitzustellen und im zweiten Energiesparmodus nur die Energieversorgung der Steuerelektronik bereitzustellen. Somit wird der Energieverbrauch der Maschine 102 im zweiten Energiesparmodus erheblich reduziert, da u.U. nichts mehr eingeschaltet ist oder u.U. nur die Steuerelektronik und nicht noch zusätzlich Aktoren in Betriebsbereitschaft sind. Abhängig von der Art der Maschine können auch weitere Energiesparmoden vorgesehen sein.

Die Überwachungseinrichtung 106 kann ferner ausgebildet sein, um die Maschine 102 aus dem Energiesparmodus zurück in einen Betriebsmodus zu überführen. Dazu kann die Deaktivierungseinrichtung 104 ausgebildet sein, um ansprechend auf ein vorbestimmtes Aktivierungsereignis ein Aktivierungssignal bereitzustellen. Beispielsweise kann es sich bei dem Aktivierungsereignis um eine Eingabe eines Benutzers der Maschine 102 handeln. Die Überwachungseinrichtung 106 kann ausgebildet sein, um die Maschine 102 ansprechend auf das Aktivierungssignal gemäß einer vorbestimmten Aktivierungsvorschrift aus dem Energiesparmodus in den Betriebsmodus zu überführen. Die Aktivierungsvorschrift kann sicherstellen, dass beim Überführen der Maschine 102 in den Betriebsmodus zuvor gesicherte Daten wieder bereitgestellt werden und die Maschine 102 keine unerwünschten Aktionen ausführt.

Die Vorrichtung 100 kann ausgebildet sein, um das erfindungsgemäße Verfahren zum Reduzieren des Energieverbrauchs der Maschine 102 auszuführen. Dabei kann in einem ersten Schritt ein Bereitstellen eines Deaktivierungssignals erfolgen. Das Deaktivierungssignal kann ansprechend auf ein vorbestimmtes Deaktivierungsereignis bereitgestellt werden. In einem zweiten Schritt kann ein Überführen der Maschine in einen Energiesparmodus erfolgen. Das Überführen kann ansprechend auf das Deaktivierungssignal gemäß einer vorbestimmten Deaktivierungsvorschrift erfolgen.

Die Vorrichtung 100 zum Reduzieren des Energieverbrauchs der Maschine 102 kann als eigenständige Einheit ausgeführt sein und separat von der Maschine 102 angeordnet sein. Alternativ kann die Vorrichtung 100 in der Maschine 102 integriert sein oder als Software-Programm innerhalb der NC-Steuerung.

Bei der Maschine 102 kann es sich um eine Maschine aus dem Bereich der Automatisierungstechnik mit Schwerpunkt im Bereich CNC (computerisierte numerische Steuerung), SPS (speicherprogrammierbare Steuerung), Motion oder Robotik handeln. Unter Motion fallen beispielsweise Antriebe oder Motionsteuerungen. Die Maschine 102 kann einen oder eine Mehrzahl von Aktoren aufweisen. Bei dem Aktor kann es sich um einen Leistungsteil handeln, beispielsweise in Form einer oder einer Mehrzahl von Hydraulikpumpen oder Antriebe. Ferner kann in der Maschine 102 ein Stand by oder Sleep-Modus verfügbar sein oder durch eine entsprechende Ansteuerung einstellbar sein. Die Maschine kann auch als ein System, beispielsweise als ein Automatisierungssystem ausgebildet sein.

Gemäß einem Ausführungsbeispiel kann es sich bei der Maschine 102 um eine Maschine handeln, die im Bereich der Fertigung eingesetzt werden kann. Bei der Maschine 102 kann es sich um eine Fertigungsanlage handeln. Die Maschine 102 kann fünf Betriebsmoden aufweisen (s. oben). Im Zustand "Fertigung" ist die Maschine 102 voll funktionsfähig und kann eine Fertigungsaufgabe erfüllen, für die sie vorgesehen ist. In diesem Zustand ist der Energieverbrauch der Maschine 102 am größten. Im Zustand "Fertigungsbereitschaft" kann ein Leistungsteil der Maschine 102 keine Leistung aufweisen. Beispielsweise kann ein Antrieb der Maschine 102 stehen und mechanische Teile der Maschine kein Haltemoment aufweisen. In diesem Mode sind jedoch an älteren Maschinen in der Regel alle Komponenten / Aktoren noch "unter Leistung". Der Energieverbrauch der Maschine 102 geringer als im Zustand "Fertigung", da die Prozess-spezifischen Kräfte, wie beispielsweise bei Werkzeugmaschinenbeim Zerspanen, nicht mehr aufzubringen sind. Im Zustand "Stand by" kann lediglich eine eingeschränkte Funktionalität der Maschine 102 bereitgestellt werden. Beispielsweise kann nur eine Steuerspannung von 24V anliegen und somit nur die Steuerung- und die Antriebselektronik der Maschine 102 aktiv sein. Es ist auch möglich, dass ein Feldbus der Maschine 102 betriebsbereit ist oder andere für die Maschinenbedienung relevante Komponenten wie etwa eine Beleuchtungseinrichtung innerhalb der Maschine eingeschaltet ist. In diesem Zustand ist der Energieverbrauch der Maschine 102 geringer als im Zustand "Fertigungsbereitschaft". Im Sleep-Mode ist auch die Steuerspannung der Antriebselektronik sowie aller übrigen im Stand by-Mode noch aktiven Komponenten ausgeschaltet. Im Zustand "aus" kann die Maschine 102 komplett ausgeschaltet sein und somit keinerlei Funktionalität bereitstellen. In diesem Zustand ist der Energieverbrauch der Maschine 102 am geringsten bzw. gleich Null.

Zur Erhöhung der Energieeffizienz der Maschine 102 kann die Maschine 102, wenn sie keine Fertigungsaufgabe erfüllt, vom Zustand "Fertigung" zunächst in den Zustand "Fertigungsbereitschaft" überführt werden. Anschließend kann die Maschine 102 in den Zustand "Stand by", dann in den Zustand "Sleep-Mode" und bei Bedarf auch in den Zustand "Aus" überführt werden. Die einzelnen Zustände können jeweils zeitgesteuert aktiviert werden. Alternativ können die einzelnen Zustände auch durch den Maschinenhersteller für Nebenprozesse oder von einem Benutzer über das Bedienfeld der Maschine oder über das Steuerprogramm eingestellt werden. Einzelne Zustände können situations- oder maschinenabhängig auch übersprungen werden. Um die Maschine 102 wieder in den Zustand "Fertigung" zu überführen, können die Schritte in umgekehrter Reihenfolge ausgeführt werden.

In Abhängigkeit des zu fertigenden Teils können auch einzelne Komponenten /Aktoren, beispielsweise mit eigener dezentraler Steuerungseinrichtung eine Vorrichtung 100 enthalten, die dafür sorgt das die betreffende Komponente/Aktor von Fertigungsbereitschaft in den Zustand "Stand by" bzw. nachfolgend in den "Sleep-Mode" geschaltet wird. Auf diese Weise kann beispielsweise eine Vorrichtung 100 in einem Antrieb dafür sorgen, dass die zugehörige Achse, die beispielsweise ein Werkzeugmagazin verfährt, nach Bereitstellung eines Werkzeugs bis zum nächsten Positionierauftrag bzw. bis zum nächsten Werkzeugwechsel in den "Stand by-Mode" oder "Sleep-Mode" geschaltet wird.

Fig. 2 zeigt eine schematische Darstellung eines Grundprinzips eines Energiesparmodus in Form eines Sleep-Modus, gemäß einem Ausführungsbeispiel der vorliegenden Erfindung. Fig. 2 zeigt eine Vorrichtung 100 in Form einer Überwachungs-Instanz zum Reduzieren des Energieverbrauchs einer Maschine 102. Die Maschine 102 weist eine oder mehrere Steuerungen auf. Bei der Steuerung kann es sich um eine zusätzliche Steuerung für einen Computer, beispielsweise einen PC handeln. Die Steuerung kann in Form einer Einsteckkarte ausgeführt sein. Die Steuerung kann erforderlichenfalls die Vorrichtung 100 beinhalten. Die Vorrichtung 100 könnte erforderlichenfalls auch dezentral in den einzelnen Komponenten mit eigener Steuerungseinheit, z.B. einem Antrieb, realisiert werden.

Die Steuerung (NC-, Motion-, SPS, RC- Steuerung) kann einen Speicher mit einem Filesystem 212, einem gepufferten Speicher 214 und einem ungepuffertern Speicher 216 aufweisen. Die Steuerung kann ferner eine numerische Steuerung (NC) und/oder Motionsteuerung und/oder RC-Steuerung 222 und/oder eine speicherprogrammierbare Steuerung (SPS) 224 aufweisen. Die Überwachungs-Instanz 100 kann mit dem Filesystem 212, dem gepufferten Speicher 214, dem ungepuffertern Speicher 216, der numerischen Steuerung 222 und der speicherprogrammierbaren Steuerung 224 gekoppelt sein. Die Maschine 102 kann ferner einen oder eine Mehrzahl von Antrieben 226 und Eingängen bzw. Ausgängen (IOs) 228 aufweisen. Die Antriebe 226 können mit der numerischen Steuerung 222 gekoppelt sein. Die IOs 228 können mit der speicherprogrammierbaren Steuerung 224 gekoppelt sein. Die numerischen Steuerung 222 kann eine Satzinterpration 232, eine Satzaufbereitung 234 und eine Satzabarbeitung 236 aufweisen. Die speicherprogrammierbaren Steuerung 224 kann eine Mehrzahl von Tasks (Aufgaben) aufweisen, von den ein "Task 1" 242 und ein "Task 2" 244 gezeigt ist.

Der in Fig. 2 gezeigte Sleep-Mode kann beispielsweise für Automatisierungssysteme eingesetzt werden. Der erfindungsgemäße Sleep-Mode ermöglicht insbesondere ein schnelles Ein- und Ausschalten ohne fehlerhafte Zustände an der Maschine bzw. Anlage zu erzeugen.

Insbesondere kann der gesamte flüchtige Speicher auf eine Festplatte bzw. einen gepufferten Speicher kopiert (Core Dump) werden und bei Bedarf wieder geladen werden. Dies geht schnell und es gehen keine Daten verloren. Ferner kann eine Instanz, die in Software ausgeführt sein kann, das Ausschalten sowie das Einschalten kontrollieren, so dass es nicht zu unzulässigen Reaktionen in der Maschine kommen kann.

Die Überwachungsinstanz kann beim Ausschalten sowie beim Einschalten eine Schrittkette abarbeiten. Die einzelnen Schritte können durch den Maschinenhersteller definiert werden. Auf diese Weise können in definierter Reihenfolge applikationsspezifisch numerische Steuerungs- (NC-) bzw. Motion-Programme oder speicherprogrammierbare Steuerungs- (SPS-) Programme auf den verschiedenen Teilsystemen abgearbeitet werden.

Wie erste Untersuchungen an Werkzeugmaschinen unter energieeffizienten Aspekten ergeben haben, lässt sich der Stromverbrauch um bis zu 30% reduzieren, wenn Maschinen/Anlagen bei Stillstand konsequent ausgeschaltet werden.

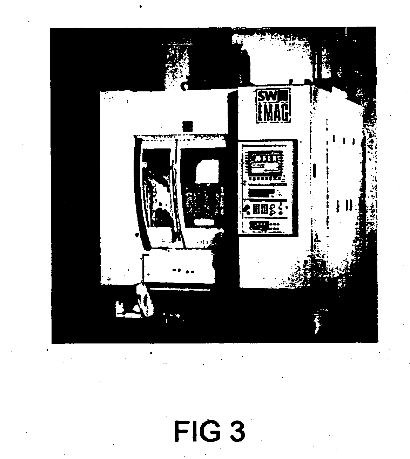

Fig. 3 zeigt eine Maschine gemäß einem Ausführungsbeispiel der vorliegenden Erfindung.

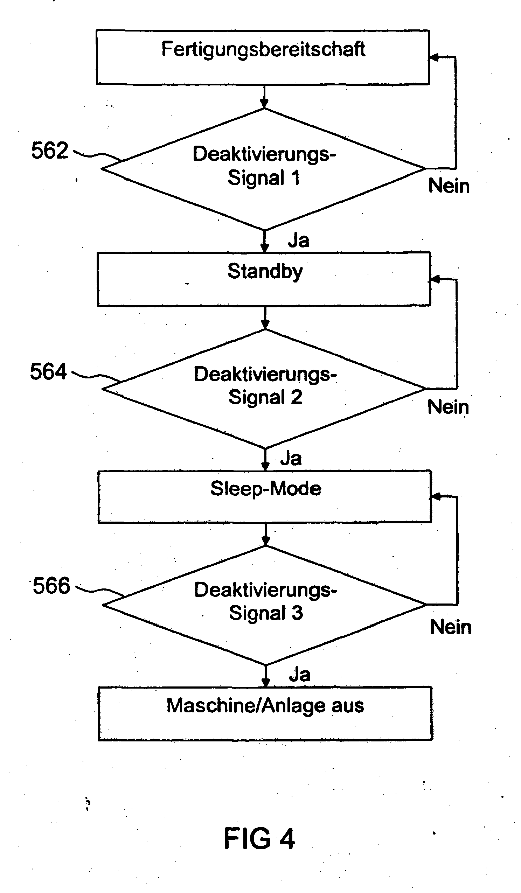

Fig. 4 zeigt eine Darstellung einer möglichen Ausprägung der Logik der Deaktivierungseinrichtung.

Gemäß einem Ausführungsbeispiel kann die Vorrichtung zum Reduzieren des Energieverbrauchs einer Maschine eine erste Überwachungs-Instanz 562, eine zweite Überwachungs-Instanz 564 und eine dritte Überwachungs-Instanz 566 aufweisen. Die erste Überwachungs-Instanz 562 kann ausgebildet sein, um die Maschine abhängig von einem ersten Deaktivierungssignal von dem Zustand Fertigungsbereitschaft in den Zustand Standby zu überführen bzw. im Zustand Fertigungsbereitschaft zu belassen. Die zweite Überwachungs-Instanz 564 kann ausgebildet sein, um die Maschine abhängig von einem zweiten Deaktivierungssignal von dem Zustand Standby in den Zustand Sleep-Mode zu überführen bzw. im Zustand Standby zu belassen. Die dritte Überwachungs-Instanz 564 kann ausgebildet sein, um die Maschine abhängig von einem dritten Deaktivierungssignal von dem Zustand Sleep-Mode in den Zustand Maschine/Anlage aus zu überführen bzw. im Zustand Sleep-Mode zu belassen.

Die erste Überwachungs-Instanz 562, kann eine Deaktivierungseinrichtung 1 und eine Überwachungseinrichtung 1 aufweisen. Die Deaktivierungseinrichtung 1 kann ausgebildet sein, um ansprechend auf ein vorbestimmtes Deaktivierungsereignis 1 ein Deaktivierungssignal 1 bereitzustellen. Die Überwachungseinrichtung 1 kann ausgebildet sein, um die Maschine ansprechend auf das Deaktivierungssignal 1 gemäß einer vorbestimmten Deaktivierungsvorschrift 1 in einen Energiesparmodus (Stand by) zu überführen. Des Weiteren kann mit der zweiten Überwachungs-Instanz 564, eine Deaktivierungseinrichtung 2 und eine Überwachungseinrichtung 2 zur Verfügung. Die Deaktivierungseinrichtung 2 kann ausgebildet sein, um auf ein vorbestimmtes Deaktivierungsereignis 2 ein Deaktivierungssignal 2 bereitzustellen. Die Überwachungseinheit 2 kann ausgebildet sein, um die Maschine / Anlage entsprechend auf das Deaktivierungssignal 2 gemäß einer vorbestimmten Deaktivierungsvorschrift 2 in den Sleep-Mode zu schalten. Analog ist für die dritte Überwachungs-Instanz 566 eine weitere Deaktivierungsvorrichtung 3 denkbar die die Maschine von dem Sleep-Mode völlig abschaltet, wie es in Fig. 4 gezeigt ist.

Gemäß diesem Ausführungsbeispiel handelt es sich bei der erfindungsgemäßen Maschine um eine Maschine mit einem ausgeschaltet Betriebsmodus (Fertigungsbetrieb und Fertigungsbereitschaft) und einem Energiesparmodus (Stand by und ausgeschaltet), die eine erfindungsgemäße Vorrichtung zum Reduzieren des Energieverbrauchs aufweist.

Gemäß diesem Ausführungsbeispiel kann das erfindungsgemäße Verfahren zum Reduzieren des Energieverbrauchs einer Maschine einen Schritt des Bereitstellens eines oder zweier Deaktivierungssignale, ansprechend auf ein vorbestimmtes Deaktivierungsereignis 1 und / oder 2; und einen Schritt des Überführens der Maschine in einen Energiesparmodus (Stand by und / oder Sleep-Mode), gemäß einer vorbestimmten Deaktivierungsvorschrift 1 und / oder 2, ansprechend auf das Deaktivierungssignal 1 und / oder 2 aufweisen. In der gleichen Weise kann die Maschine mittels einer weiteren Deaktivierungseinheit 3 und zugehöriger Überwachungseinheit in einem weiteren Schritt abgeschaltet werden.

Die erfindungsgemäße Vorrichtung kann innerhalb einer Maschine bzw. Anlage mehrfach zur Anwendung kommen. Weist die Maschine bzw. Anlage eine übergeordnete Steuerung auf, so kann die Vorrichtung zentral in der übergeordneten Steuerung angeordnet sein. Dies kann beispielsweise bei Fertigungsanlagen, wie etwa Transfermaschinen, der Fall sein. Weist die Maschine bzw. Anlage mehrere Steuerungen auf, beispielsweise wenn eine ganze Fertigungsanlage zu betreiben ist, so können die Vorrichtung oder eine Mehrzahl von Vorrichtungen dezentral in den mehreren Steuerungen angeordnet sein.

Ferner kann die erfindungsgemäße Vorrichtung auch dezentral in untergeordneten "intelligenten" Komponenten und/oder Aktoren zum Einsatz kommen. Beispielsweise kann die Vorrichtung dezentral in einzelnen untergeordneten Komponenten und/oder Aktoren mit eigner Steuerung, wie z.B. in einer Antriebssteuerung oder in einer Pumpensteuerung, angeordnet sein.

Ferner kann eine Trennung zwischen Überwachung und Deaktivierung aufgehoben sein. Insbesondere können Funktionen der Überwachungseinheit in der Deaktivierungseinheit ausgeführt werden und umgekehrt. Auch können beide Teileinheiten in eine Einheit verschmelzen.

Die beschriebenen Ausführungsbeispiele sind nur beispielhaft gewählt und können miteinander kombiniert werden.

### Bezugszeichenliste

- 100: Vorrichtung
- 102: Maschine
- 104: Deaktivierungseinrichtung
- 106: Überwachungseinrichtung
- 212: Filesystem
- 214: gepufferter Speicher
- 216: ungepufferter Speicher
- 222: numerische Steuerung
- 224: speicherprogrammierbare Steuerung
- 226: Antriebe
- 228: IOs
- 232: Satzinterperation
- 234: Satzaufbereitung
- 236: Satzabarbeitung
- 242: Task 1
- 244: Task 2
- 352: Balken
- 354: Balken
- 562: erste Überwachungs-Instanz
- 564: zweite Überwachungs-Instanz
- 566: dritte Überwachungs-Instanz

## Patentansprüche

1. Vorrichtung (100) zum Reduzieren des Energieverbrauchs einer Maschine (102), die eine Steuerelektronik und mindestens einen Antrieb aufweist, wobei die Vorrichtung aufweist,
eine Deaktivierungseinrichtung (104), die ausgebildet ist, um ansprechend auf vorbestimmte Deaktivierungsereignisse Deaktivierungssignale bereitzustellen, und
eine Überwachungseinrichtung (106), die ausgebildet ist, um die Maschine ansprechend auf die Deaktivierungssignale gemäß einer vorbestimmten Deaktivierungsvorschrift in einen Energiesparmodus zu überführen,
**dadurch gekennzeichnet, dass**
die Vorrichtung ausgebildet ist zum Überführen der Maschine zwischen fünf Betriebsmoden, wobei die fünf Betriebsmoden einen Fertigungsmodus, in dem die Maschine voll funktionsfähig ist und eine Fertigungsaufgabe erfüllen kann, für die sie vorgesehen ist, einen Fertigungsbereitschaftsmodus, in dem der Antrieb der Maschine steht, einen ersten Energiesparmodus, in dem die Steuerelektronik und eine Antriebselektronik des Antriebs aktiv sind, einen zweiten Energiesparmodus, in dem eine Steuerspannung der Antriebselektronik ausgeschaltet ist, und einen dritten Energiesparmodus umfassen, in dem die Maschine komplett ausgeschaltet ist, wobei der Energieverbrauch der Maschine im Fertigungsmodus am größten, im Fertigungsbereitschaftsmodus geringer als im Fertigungsmodus, im ersten Energiesparmodus geringer als im Fertigungsbereitschaftsmodus, im zweiten Energiesparmodus geringer als im ersten Energiesparmodus ist und im dritten Energiesparmodus am geringsten ist,
die Deaktivierungseinrichtung (104) eine Zeitüberwachung aufweist, die ausgebildet ist, um die Deaktivierungssignale in Bezug auf die fünf Betriebsmoden zeitgesteuert bereitzustellen; und
die Überwachungseinrichtung (106) ausgebildet ist, um die Maschine (102) wenn sie keine Fertigungsaufgabe erfüllt, vom Fertigungsmodus zunächst in den Fertigungsbereitschaftsmodus zu überführen und die Maschine (102) ansprechend auf ein erstes Deaktivierungssignal in den ersten Energiesparmodus, ansprechend auf ein zweites Deaktivierungssignal in den zweiten Energiesparmodus und ansprechend auf ein drittes Deaktivierungssignal in den dritten Energiesparmodus zu überführen.

2. Vorrichtung gemäß Anspruch 1, bei der die Zeitüberwachung ausgebildet ist, um das Deaktivierungssignalbereitzustellen, wenn sich die Maschine für eine vorbestimmte Zeitdauer in einem Ruhezustand befindet.

3. Vorrichtung gemäß einem der vorangegangenen Ansprüche, bei der die Überwachungseinrichtung (106) ausgebildet ist, um Betriebsinformationen der Maschine (102) beim Überführen in den Energiesparmodus zu sichern.

4. Vorrichtung gemäß einem der vorangegangenen Ansprüche, bei der die Überwachungseinrichtung (106) ausgebildet ist, um Daten eines flüchtigen Speichers der Maschine (102) beim Überführen in den Energiesparmodus auf einen nichtflüchtigen Speicher zu übertragen.

5. Vorrichtung gemäß einem der vorangegangenen Ansprüche, wobei die Maschine (102) mindestens einen Aktor aufweist und bei der die Überwachungseinrichtung (106) ausgebildet ist, um eine Funktion des Aktors zu überwachen, um eine unzulässige Funktion des Aktors beim Überführen in den Energiesparmodus zu verhindern.

6. Vorrichtung gemäß einem der vorangegangenen Ansprüche, wobei die Maschine (102) eine Mehrzahl von Teilsystemen aufweist und bei der die Überwachungseinrichtung (106) ausgebildet ist, um die Mehrzahl von Teilsystemen ansprechend auf das Deaktivierungssignal in den Energiesparmodus zu überführen.

7. Vorrichtung gemäß einem der vorangegangenen Ansprüche, bei der die Deaktivierungseinrichtung (104), ausgebildet ist, um ansprechend auf ein vorbestimmtes Aktivierungsereignis ein Aktivierungssignal bereitzustellen und bei der die Überwachungseinrichtung (106) ausgebildet ist, um die Maschine (102) ansprechend auf das Aktivierungssignal gemäß einer vorbestimmten Aktivierungsvorschrift aus dem Energiesparmodus in einen Betriebsmodus zu überführen.

8. Maschine (102), die eine Vorrichtung gemäß einem der vorangehenden Ansprüche, die Steuerelektronik, den mindestens einen Antrieb und die fünf Betriebsmoden aufweist.

9. Maschine gemäß Anspruch 8, bei der es sich um eine CNC-gesteuerte Maschine, eine SPS-gesteuerte Maschine, eine Motion-gesteuerte Maschine oder eine Roboter-gesteuerte Maschine handelt.

10. Verfahren zum Reduzieren des Energieverbrauchs einer Maschine (102) die eine Steuerelektronik und mindestens einen Antrieb aufweist, wobei das Verfahren die Schritte aufweist,
Bereitstellen von Deaktivierungssignalen, ansprechend auf ein vorbestimmtes Deaktivierungsereignis, und
Überführen der Maschine in einen Energiesparmodus gemäß einer vorbestimmten Deaktivierungsvorschrift ansprechend auf die Deaktivierungssignale,
**dadurch gekennzeichnet, dass**
die Maschine zwischen fünf Betriebsmoden überführt wird, wobei die fünf Betriebsmoden einen Fertigungsmodus, in dem die Maschine voll funktionsfähig ist und eine Fertigungsaufgabe erfüllen kann, für die sie vorgesehen ist, einen Fertigungsbereitschaftsmodus, in dem der Antrieb der Maschine steht, einen ersten Energiesparmodus, in dem die Steuerelektronik und eine Antriebselektronik des Antriebs aktiv sind, einen zweiten Energiesparmodus, in dem eine Steuerspannung der Antriebselektronik ausgeschaltet ist, und einen dritten Energiesparmodus umfassen, in dem die Maschine komplett ausgeschaltet ist, wobei der Energieverbrauch der Maschine im Fertigungsmodus am größten, im Fertigungsbereitschaftsmodus geringer als im Fertigungsmodus, im ersten Energiesparmodus geringer als im Fertigungsbereitschaftsmodus, im zweiten Energiesparmodus geringer als im ersten Energiesparmodus ist und im dritten Energiesparmodus am geringsten ist,
die Deaktivierungssignale zeitgesteuert bereitgestellt werden, und
die Maschine (102), wenn sie keine Fertigungsaufgabe erfüllt, vom Fertigungsmodus zunächst in den Fertigungsbereitschaftsmodus überführt wird und die Maschine (102) ansprechend auf ein erstes Deaktivierungssignal in den ersten Energiesparmodus, ansprechend auf ein zweites Deaktivierungssignal in den zweiten Energiesparmodus und ansprechend auf ein drittes Deaktivierungssignal in den dritten Energiesparmodus überführt wird.

11. Computerprogramm, das Programmcode-Mittel umfasst, um alle Schritte eines Verfahrens gemäß Anspruch 10 durchzuführen, wenn das Computerprogramm auf einem Computer oder einer entsprechenden Rechnereinheit ausgeführt wird.

## Claims

1. Apparatus (100) for reducing the energy consumption of a machine (102) which has control electronics and at least one drive, the apparatus having
a deactivation device (104) which is designed to provide deactivation signals in response to predetermined deactivation events, and
a monitoring device (106) which is designed to switch the machine over into an energy saving mode in response to the deactivation signals in accordance with a predetermined deactivation rule,
**characterized in that**
the apparatus is designed to switch the machine over between five operating modes, the five operating modes comprising a production mode in which the machine is fully functional and can fulfil a production task for which it is provided, a production readiness mode in which the machine drive is at standstill, a first energy saving mode in which the control electronics and drive electronics of the drive are active, a second energy saving mode in which a control voltage of the drive electronics is switched off, and a third energy saving mode in which the machine is completely switched off, the energy consumption of the machine being greatest in the production mode, being less in the production readiness mode than in the production mode, being less in the first energy saving mode than in the production readiness mode, being less in the second energy saving mode than in the first energy saving mode, and being least in the third energy saving mode,
the deactivation device (104) has a time monitor which is designed to provide the deactivation signals under time control with reference to the five operating modes; and
the monitoring device (106) is designed to switch the machine (102), when not fulfilling any production task, over from the production mode firstly into the production readiness mode, and to switch the machine (102) over into the first energy saving mode in response to a first deactivation signal, into the second energy saving mode in response to a second deactivation signal, and into the third energy saving mode in response to a third deactivation signal.

2. Apparatus according to Claim 1, in which the time monitor is designed to provide the deactivation signal when the machine is in an idle mode for a predetermined period of time.

3. Apparatus according to one of the preceding claims, in which the monitoring device (106) is designed to save operating information of the machine (102) upon switching over into the energy saving mode.

4. Apparatus according to one of the preceding claims, in which the monitoring device (106) is designed to transmit data of a volatile memory of the machine (102) to a non-volatile memory upon switching over into the energy saving mode.

5. Apparatus according to one of the preceding claims, in which the machine (102) has at least one actuator, and in which the monitoring device (106) is designed to monitor a function of the actuator in order to prevent an impermissible function of the actuator upon switching over into the energy saving mode.

6. Apparatus according to one of the preceding claims, in which the machine (102) has a plurality of subsystems, and in which the monitoring device (106) is designed to switch over the plurality of subsystems into the energy saving mode in response to the deactivation signal.

7. Apparatus according to one of the preceding claims, in which the deactivation device (104) is designed to provide an activation signal in response to a predetermined activation event, and in which the monitoring device (106) is designed to switch the machine (102) over from the energy saving mode into an operating mode in response to the activation signal in accordance with a predetermined activation rule.

8. Machine (102) which has an apparatus according to one of the preceding claims, the control electronics, the at least one drive and the five operating modes.

9. Machine according to Claim 8 which is a CNC-controlled machine, a PLC-controlled machine, a motion-controlled machine or a robot-controlled machine.

10. Method for reducing the energy consumption of a machine (102) which has control electronics and at least one drive, the method having the steps of
providing deactivation signals in response to a predetermined deactivation event, and
switching the machine over into an energy saving mode in accordance with a predetermined deactivation rule in response to the deactivation signals,
**characterized in that**
the machine is switched over between five operating modes, the five operating modes comprising a production mode in which the machine is fully functional and can fulfil a production task for which it is provided, a production readiness mode in which the machine drive is at standstill, a first energy saving mode in which the control electronics and drive electronics of the drive are active, a second energy saving mode in which a control voltage of the drive electronics is switched off, and a third energy saving mode in which the machine is completely switched off, the energy consumption of the machine being greatest in the production mode, being less in the production readiness mode than in the production mode, being less in the first energy saving mode than in the production readiness mode, being less in the second energy saving mode than in the first energy saving mode, and being least in the third energy saving mode,
the deactivation signals are provided under time control, and
the machine (102), when not fulfilling any production task, is switched over from the production mode firstly into the production readiness mode, and the machine (102) is switched over into the first energy saving mode in response to a first deactivation signal, into the second energy saving mode in response to a second deactivation signal, and into the third energy saving mode in response to a third deactivation signal.

11. Computer program which comprises program code means in order to carry out all the steps of a method according to Claim 10 when the computer program is executed on a computer or an appropriate arithmetic control unit.

## Revendications

1. Dispositif (100) pour réduire la consommation d'énergie d'une machine (102), laquelle présente une électronique de commande et au moins un mécanisme d'entraînement, le dispositif présentant
un mécanisme de désactivation (104) qui est configuré pour délivrer des signaux de désactivation en réaction à des événements de désactivation prédéfinis, et
un mécanisme de surveillance (106) qui est configuré pour amener la machine dans un mode d'économie d'énergie en réaction aux signaux de désactivation conformément à une prescription de désactivation prédéfinie,
**caractérisé en ce que**
le dispositif est configuré pour amener la machine dans cinq modes de fonctionnement, les cinq modes de fonctionnement incluant un mode de fabrication, dans lequel la machine est pleinement fonctionnelle et peut accomplir une tâche de fabrication pour laquelle elle est prévue, un mode prêt pour la fabrication, dans lequel le mécanisme d'entraînement de la machine est à l'arrêt, un premier mode d'économie d'énergie, dans lequel l'électronique de commande et une électronique d'entraînement du mécanisme d'entraînement sont actives, un deuxième mode d'économie d'énergie, dans lequel une tension de commande de l'électronique d'entraînement est déconnectée, et un troisième mode d'économie d'énergie, dans lequel la machine est complètement déconnectée, la consommation d'énergie de la machine étant la plus élevée dans le mode de fabrication, inférieure à celle du mode de fabrication dans le mode prêt pour la fabrication, inférieure à celle du mode prêt pour la fabrication dans le premier mode d'économie d'énergie, inférieure à celle du premier mode d'économie d'énergie dans le deuxième mode d'économie d'énergie et la plus faible dans le troisième mode d'économie d'énergie,
le mécanisme de désactivation (104) présente un contrôleur de temps qui est configuré pour délivrer les signaux de désactivation de manière commandée dans le temps en référence aux cinq modes de fonctionnement ; et
le mécanisme de surveillance (106) est configuré pour amener la machine (102), lorsqu'elle n'accomplit aucune tâche de fabrication, tout d'abord du mode de fabrication dans le mode prêt pour la fabrication et pour amener la machine (102), en réaction à un premier signal de désactivation, dans le premier mode d'économie d'énergie, en réaction à un deuxième signal de désactivation, dans le deuxième mode d'économie d'énergie et en réaction à un troisième signal de désactivation, dans le troisième mode d'économie d'énergie.

2. Dispositif selon la revendication 1, avec lequel le contrôleur de temps est configuré pour délivrer le signal de désactivation lorsque la machine se trouve dans un état de repos pendant une durée prédéfinie.

3. Dispositif selon l'une des revendications précédentes, avec lequel le mécanisme de surveillance (106) est configuré pour sauvegarder les informations opérationnelles de la machine (102) lors du passage dans le mode d'économie d'énergie.

4. Dispositif selon l'une des revendications précédentes, avec lequel le mécanisme de surveillance (106) est configuré pour transmettre les données d'une mémoire volatile de la machine (102) vers une mémoire non volatile lors du passage dans le mode d'économie d'énergie.

5. Dispositif selon l'une des revendications précédentes, avec lequel la machine (102) présente au moins un actionneur et avec lequel le mécanisme de surveillance (106) est configuré pour surveiller une fonction de l'actionneur afin d'empêcher un fonctionnement non autorisé de l'actionneur lors du passage dans le mode d'économie d'énergie.

6. Dispositif selon l'une des revendications précédentes, avec lequel la machine (102) présente une pluralité de systèmes partiels et avec lequel le mécanisme de surveillance (106) est configuré pour, en réaction au signal de désactivation, amener la pluralité de systèmes partiels dans le mode d'économie d'énergie.

7. Dispositif selon l'une des revendications précédentes, avec lequel le mécanisme de désactivation (104) est configuré pour, en réaction à un événement d'activation prédéfini, générer un signal d'activation et avec lequel le mécanisme de surveillance (106) est configuré pour, en réaction au signal d'activation, amener la machine (102) conformément à une prescription d'activation prédéfinie du mode d'économie d'énergie dans un mode de fonctionnement.

8. Machine (102), laquelle présente un dispositif selon l'une des revendications précédentes, l'électronique de commande, l'au moins un mécanisme d'entraînement et les cinq modes de fonctionnement.

9. Machine selon la revendication 8, laquelle est une machine commandée par une CN, une machine commandée par un API, une machine commandée par mouvement ou une machine commandée par un robot.

10. Procédé pour réduire la consommation d'énergie d'une machine (102), laquelle présente une électronique de commande et au moins un mécanisme d'entraînement, le procédé présentant les étapes suivantes
délivrance de signaux de désactivation en réaction à un événement de désactivation prédéfini, et
amenée de la machine dans un mode d'économie d'énergie en réaction aux signaux de désactivation conformément à une prescription de désactivation prédéfinie,
**caractérisé en ce que**
la machine est amenée dans cinq modes de fonctionnement, les cinq modes de fonctionnement incluant un mode de fabrication, dans lequel la machine est pleinement fonctionnelle et peut accomplir une tâche de fabrication pour laquelle elle est prévue, un mode prêt pour la fabrication, dans lequel le mécanisme d'entraînement de la machine est à l'arrêt, un premier mode d'économie d'énergie, dans lequel l'électronique de commande et une électronique d'entraînement du mécanisme d'entraînement sont actives, un deuxième mode d'économie d'énergie, dans lequel une tension de commande de l'électronique d'entraînement est déconnectée, et un troisième mode d'économie d'énergie, dans lequel la machine est complètement déconnectée, la consommation d'énergie de la machine étant la plus élevée dans le mode de fabrication, inférieure à celle du mode de fabrication dans le mode prêt pour la fabrication, inférieure à celle du mode prêt pour la fabrication dans le premier mode d'économie d'énergie, inférieure à celle du premier mode d'économie d'énergie dans le deuxième mode d'économie d'énergie et la plus faible dans le troisième mode d'économie d'énergie,
les signaux de désactivation sont délivrés de manière commandée dans le temps, et
la machine (102), lorsqu'elle n'accomplit aucune tâche de fabrication, est amenée tout d'abord du mode de fabrication dans le mode prêt pour la fabrication et la machine (102), en réaction à un premier signal de désactivation, est amenée dans le premier mode d'économie d'énergie, en réaction à un deuxième signal de désactivation, dans le deuxième mode d'économie d'énergie et en réaction à un troisième signal de désactivation, dans le troisième mode d'économie d'énergie.

11. Programme informatique qui comprend des moyens de code de programme pour exécuter toutes les étapes d'un procédé selon la revendication 10 lorsque le programme informatique est exécuté sur un ordinateur ou une unité de calcul correspondante.
